# EUROPÄISCHE PATENTANMELDUNG

(11) **EP 3 564 642 A1**
(43) Veröffentlichungstag der Anmeldung: **06.11.2019**
(21) Anmeldenummer: 18170414.9
(22) Anmeldetag: 02.05.2018
(51) Int. Cl.: G01L 23/08, F02D 35/02

(54) **VORRICHTUNG ZUR BESTIMMUNG DES DRUCKS IN EINEM BRENNRAUM EINES GROSSMOTORS SOWIE GROSSMOTOR**

(71) Anmelder: Winterthur Gas & Diesel AG, 8401 Winterthur (CH)
(72) Erfinder: Staiger, Ulrich, 8260 Stein am Rhein (CH); Stürm, Thomas, 8505 Dettighofen (CH)
(74) Vertreter: Intellectual Property Services GmbH

(57) **Zusammenfassung**

Es wird eine Vorrichtung zum Bestimmen des Drucks in einem Brennraum (100) eines Grossmotors vorgeschlagen, umfassend ein Ablassventil (2) zum Abführen eines Fluids aus dem Brennraum (100) durch einen den Brennraum (100) begrenzenden Zylinderdeckel (101), sowie einen Drucksensor(3) zum Bestimmen des Drucks in dem Brennraum (100), wobei das Ablassventil (2) eine Ventilhülse (4) umfasst, welche sich von einem ersten Ende(41) in einer Längsrichtung (L) bis zu einem zweiten Ende (42) erstreckt, wobei am zweiten Ende (42) der Ventilhülse (4) ein Schliesskörper (5) zum dichtenden Zusammenwirken mit einem Ventilsitz (61, 61') vorgesehen ist, und wobei der Schliesskörper (5) lösbar mit der Ventilhülse (4) verbunden ist, wobei ferner der Drucksensor (3) in das Ablassventil (2) integriert ist, wobei der Drucksensor (3) in der Ventilhülse (4) im Bereich des zweiten Endes (42) angeordnet ist, wobei der Drucksensor (3) lösbar bezüglich des Ablassventils (2) fixiert ist, und wobei der Aussendurchmesser des Drucksensors (3) kleiner ist als der Innendurchmesser (ID) der Ventilhülse (4), derart dass der Drucksensor (3) in die Ventilhülse einführbar ist. Ferner wird ein Grossmotor mit einer solchen Vorrichtung 1 vorgeschlagen.

## Beschreibung

Die Erfindung betrifft eine Vorrichtung zum Bestimmen des Drucks in einem Brennraum eines Grossmotors sowie einen Grossmotor gemäss dem Oberbegriff des unabhängigen Patentanspruchs der jeweiligen Kategorie.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Es sind verschiedene Arten von Grossmotoren bekannt, die jeweils als Zweitakt- oder als Viertakt-Motoren ausgestaltet sein können. Unter den Aspekten des wirtschaftlichen und effizienten Betriebs, der Einhaltung von Abgasgrenzwerten und der Verfügbarkeit von Ressourcen sucht man auch nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgases wie LNG (liquefied natural gas) bekannt.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoffe in demselben Motor verbrannt werden können. Diese Grossmotoren können dabei sowohl Zweitakt- als auch Viertaktmotoren sein, insbesondere auch längsgespülte Zweitakt-Grossdieselmotoren.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen Brennstoff-Luft-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Bei den oben genannten Dual-Fuel Motoren ist es beispielsweise für den Gasmodus bekannt, das Gas im gasförmigen Zustand mit der Spülluft zu vermischen, um so im Brennraum des Zylinders ein zündfähiges Gemisch zu erzeugen. Bei diesem Niederdruckverfahren erfolgt dann die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt.

Ferner sind auch Mischformen aus dem Ottobetrieb und dem Dieselbetrieb bekannt.

Für den Betrieb eines Grossdieselmotors oder eines Grossmotors im Allgemeinen, ist es wichtig, den Druck im Brennraum des Zylinders zu kennen, um den Verbrennungsprozess zu kontrollieren und optimal zu gestalten. Dies trifft in besonderem Masse zu, wenn der Grossmotor in einem Gasmodus bzw. mit Gas als Brennstoff betrieben wird. Deshalb ist es üblich, für jeden Zylinder einen Drucksensor vorzusehen oder auch andere Sensoren, mittels denen der Druck im Brennraum ermittelbar ist.

Eine bekannte Lösung ist es, einen Drucksensor vorzusehen, der möglichst nahe am Brennraum des Zylinders angeordnet ist. Dazu ist im Zylinderdeckel eine durchgängige Bohrung vorgesehen, die in den Brennraum einmündet. In der Nähe der Einmündung in den Brennraum ist diese Bohrung mit einem Gewinde versehen, sodass ein mit einem Aussengewinde versehener Drucksensor in die Bohrung eingeschraubt werden kann. Dabei ist der Drucksensor insbesondere deshalb möglichst nahe am Brennraum angeordnet, damit die Länge der Bohrung zwischen dem Drucksensor und dem Brennraum möglichst gering ist. Dieser Bereich der Bohrung stellt nämlich ein Totvolumen dar, in welchem Gas oder ein anderer Brennstoff unkontrolliert verbrennen kann.

Allerdings führt die unmittelbare Nähe des Drucksensors zum Brennraum dazu, dass sich durch die Verbrennung verursachte Rückstände auf der Sensoroberfläche ablagern. Häufig ist es sogar so, dass sich diese Ablagerungen nicht nur auf der Sensoroberfläche niederschlagen, sondern die gesamte Mündung der Bohrung überdecken.

Um einen zuverlässigen und effizienten Betrieb des Grossmotors zu gewährleisten, muss daher der Drucksensor in regelmässigen Abständen demontiert werden, damit insbesondere die Sensoroberfläche gereinigt werden kann. Da der Drucksensor sehr tief in der Bohrung im Zylinderdeckel angeordnet ist, ist er nur schwer zugänglich. Es muss ein langes Werkzeug in die Bohrung eingeführt werden, mit welchem dann der Drucksensor aus dem Gewinde der Bohrung herausgeschraubt bzw. in dieses Gewinde eingeschraubt werden kann. Hierbei besteht ein erhebliches Risiko, das Gewinde im Zylinderdeckel und/oder das Aussengewinde des Drucksensors zu beschädigen, was zu aufwendigen Reparaturarbeiten führen kann. Insbesondere das Gewinde in der Bohrung im Zylinderdeckel ist nur sehr schwer zugänglich und kann daher nur mit hohem Aufwand nachbearbeitet oder neu angefertigt werden. Die regelmässig notwendige Demontage bzw.

Montage des Drucksensors erhöht natürlich das Risiko einer Beschädigung der Gewinde.

Ausgehend von diesem Stand der Technik ist es daher eine Aufgabe der Erfindung, eine Vorrichtung zum Bestimmen des Drucks in einem Brennraum eines Grossmotors vorzuschlagen, bei welchem das genannte Problem nicht auftritt. Insbesondere soll die Vorrichtung eine möglichst einfache Montage bzw. Demontage eines Drucksensors zum Bestimmen des Drucks im Brennraum ermöglichen. Ferner ist es eine Aufgabe der Erfindung, einen Grossmotor mit einer solchen Vorrichtung vorzuschlagen.

Die diese Aufgabe lösenden Gegenstände der Erfindung sind durch die Merkmale des unabhängigen Anspruchs der jeweiligen Kategorie gekennzeichnet.

Erfindungsgemäss wird also eine Vorrichtung zum Bestimmen des Drucks in einem Brennraum eines Grossmotors vorgeschlagen, umfassend ein Ablassventil zum Abführen eines Fluids aus dem Brennraum durch einen den Brennraum begrenzenden Zylinderdeckel, sowie einen Drucksensor zum Bestimmen des Drucks in dem Brennraum, wobei das Ablassventil eine Ventilhülse umfasst, welche sich von einem ersten Ende in einer Längsrichtung bis zu einem zweiten Ende erstreckt, wobei am zweiten Ende der Ventilhülse ein Schliesskörper zum dichtenden Zusammenwirken mit einem Ventilsitz vorgesehen ist, und wobei der Schliesskörper lösbar mit der Ventilhülse verbunden ist, wobei ferner der Drucksensor in das Ablassventil integriert ist, wobei der Drucksensor in der Ventilhülse im Bereich des zweiten Endes angeordnet ist, wobei der Drucksensor lösbar bezüglich des Ablassventils fixiert ist, und wobei der Aussendurchmesser des Drucksensors kleiner ist als der Innendurchmesser der Ventilhülse, derart dass der Drucksensor in die Ventilhülse einführbar ist.

Durch die erfindungsgemässe Ausgestaltung, den Drucksensor in ein Ablassventil zu integrieren, ist es nicht mehr notwendig, den Drucksensor in ein Gewinde einer Bohrung im Zylinderdeckel einzuschrauben, und dennoch kann der Drucksensor im Zylinderkopf in unmittelbarer Nähe des Brennraums sicher angeordnet und fixiert werden. Hierdurch erleichtert sich die Montage und die Demontage des Drucksensors ganz erheblich, denn dafür ist es nicht mehr notwendig, mit einem langen Werkzeug tief in eine Bohrung im Zylinderdeckel einzugreifen. Ferner bedarf es auch keiner Bohrung mehr im Zylinderdeckel, welche an ihrem dem Brennraum zugewandten Ende mit einem Gewinde versehen ist.

Der Drucksensor wird in einfacherweise und ausserhalb des Zylinderdeckels mit dem Ablassventil verbunden bzw. in dieses integriert. Anschliessend wird die Ventilhülse einfach in die Bohrung im Zylinderdeckel eingeführt, wodurch der Drucksensor in der Nähe des Brennraums platziert wird. Zur Demontage wird die gesamte Ventilhülse mit dem Schliesskörper und dem Drucksensor aus der Bohrung im Zylinderdeckel herausgezogen. Anschliessend kann der Drucksensor in einfacher Weise demontiert und beispielsweise gereinigt werden.

Für die Integration des Drucksensors ist grundsätzlich jedes Ablassventil geeignet, welches am bzw. im Zylinderdeckel eines Grossmotors vorgesehen ist, und durch welches ein Fluid aus dem Brennraum heraus durch den Zylinderdeckel hindurch abgeführt wird.

Insbesondere ist das üblicherweise an jedem Zylinder eines Grossmotors vorgesehene Ablassventil geeignet, welches vor oder während des Startens des Grossmotors geöffnet wird, um unerwünschte Inhaltsstoffe aus dem Zylinder zu entfernen. Dieses Ventil wird häufig auch als Relief-Ventil (relief valve) bezeichnet. Bevor der Grossmotor gestartet wird, wird dieses Ablassventil geöffnet und der Kolben des Zylinders wird mittels Druckluft, der sogenannten Startluft oder mittels einer elektrischen Schaltmaschine bewegt. Bei der Aufwärtsbewegung des Kolbens werden dann unerwünschte Inhaltsstoffe oder für das Starten des Motors sogar schädliche Inhaltsstoffe durch das geöffnete Ablassventil aus dem Zylinder ausgetragen. Dieser Vorgang dient der Reinigung und gegebenenfalls der Entleerung des Zylinders.

Ein Beispiel für solche Inhaltsstoffe ist Wasser, welches sich beispielsweise beim Stillstand des Motors im Zylinder ansammeln und diesen in erheblichem Masse füllen kann. Würde man nun den Motor starten, ohne dieses Wasser vorgängig aus dem Zylinder abzuführen, so würde der Kolben bei seiner Aufwärtsbewegung die Wassersäule gegen den Zylinderdeckel schlagen, was zu ganz erheblichen Schädigungen des Motors führen kann.

Deshalb wird zunächst an jedem Zylinder das Ablassventil - meistens manuell - geöffnet und der Kolben wird mittels der Druckluft (oder mittels der elektrischen Schaltmaschine) bewegt. Bei der Aufwärtsbewegung des Kolbens wird dann das Wasser durch das Ablassventil aus dem Zylinder herausgedrückt.

Während der ersten Umdrehungen des Motors, die mittels Druckluft bewirkt werden, werden an jedem Zylinder die Ablassventile kontrolliert, ob in der aus dem Brennraum austretenden Luft unerwünschte Verunreinigungen enthalten sind. Anschliessend kann der Motor gestartet werden, was in der Regel mit Druckluft erfolgt. Dazu wird dann an jedem Zylinder das Ablassventil - meistens manuell - geschlossen. Während des Betriebs des Grossmotors ist das Ablassventil üblicherweise geschlossen.

Die Anordnung des Drucksensors in dem Ablassventil hat ferner den Vorteil, dass der Drucksensor und insbesondere seine Sensorfläche bei geöffnetem Ablassventil gereinigt wird. Da bei geöffnetem Ablassventil dieses von der aus dem Brennraum kommenden Luft bzw. dem aus dem Brennraum kommenden Gas durchströmt wird, ist auch der Drucksensor diesem Luft- bzw. Gasstrom ausgesetzt, wodurch Ablagerungen insbesondere auf der Sensorfläche des Drucksensors von diesem Strom mitgerissen werden, wodurch der Drucksensor gereinigt wird. Folglich ist es -wenn überhaupt- nur noch deutlich seltener notwendig, den Drucksensor zum Reinigen zu demontieren.

Wie bereits gesagt, ist grundsätzlich jedes im Zylinderdeckel oder am Brennraum angeordnete Ablassventil für die Integration des Drucksensors geeignet. Beispielsweise kann der Drucksensor auch in einem als Sicherheitsventil ausgestalteten Ablassventil integriert sein, welches beim Überschreiten eines Grenzdrucks im Brennraum selbsttätig öffnet.

Gemäss einer bevorzugten Ausführungsform der erfindungsgemässen Vorrichtung ist der Drucksensor im Schliesskörper fixiert, vorzugsweise mittels einer Gewindeverbindung.

Ferner ist es bevorzugt, wenn der Drucksensor in einer zentralen durchgängigen Bohrung im Schliesskörper angeordnet ist, sodass der Drucksensor mit dem im Brennraum herrschenden Druck beaufschlagbar ist.

Im Hinblick auf eine zuverlässige Fixierung und eine möglichst einfache Montage bzw. Demontage des Drucksensors ist es eine vorteilhafte Massnahme, wenn der Schliesskörper mittels einer Schraubverbindung mit der Ventilhülse verbunden ist.

In einer bevorzugten Ausführungsform umfasst die Vorrichtung einen Ventilhalter zum Befestigen des Ablassventils an dem Zylinderdeckel, wobei der Ventilhalter konzentrisch mit der Ventilhülse angeordnet ist.

Dabei ist es vorteilhaft, wenn der Ventilhalter einen seitlich angeordneten Auslass aufweist, durch welchen das Fluid abführbar ist. Dadurch ist es nämlich auch möglich an diesen Auslass vorübergehend einen externen Drucksensor anzuschliessen. Wenn dann das Ablassventil geöffnet wird, kann mittels des externen Drucksensors das korrekte Funktionieren des im Ablassventil integrierten Drucksensors geprüft werden.

Um ein einfaches Öffnen und Schliessen des Ablassventils zu ermöglichen, ist es eine vorteilhafte Massnahme, wenn die Ventilhülse im Bereich ihres ersten Endes ein Aussengewinde aufweist, mittels welchem der Schliesskörper durch ein Drehen der Ventilhülse aus einer Schliessstellung in eine Offenstellung bewegbar ist. Dieses Aussengewinde steht im Eingriff mit einem Innengewinde, welches um die Ventilhülse herum angeordnet ist.

In einer bevorzugten Ausführungsform umfasst die Vorrichtung eine Aussenhülse, welche die Ventilhülse aufnimmt und konzentrisch umgibt, wobei ein Ende der Aussenhülse als ein Ventilsitz ausgestaltet ist, welcher zum dichtenden Zusammenwirken mit dem Schliesskörper ausgestaltet und angeordnet ist.

In einer anderen, ebenfalls bevorzugten Ausführungsform ist ein separater Sitzkörper mit einem Ventilsitz vorgesehen, welcher zum dichtenden Zusammenwirken mit dem Schliesskörper ausgestaltet und angeordnet ist, wobei der Sitzkörper eine zentrale durchgängige Öffnung aufweist, sodass der Drucksensor mit dem im Brennraum herrschenden Druck beaufschlagbar ist.

Erfindungsgemäss wird ferner ein Grossmotor vorgeschlagen, mit mindestens einem Zylinder, in welchem ein Kolben zwischen einem unteren und einem oberen Umkehrpunkt hin- und her bewegbar angeordnet ist, und mit einem Zylinderdeckel, welcher gemeinsam mit dem Kolben einen Brennraum im Zylinder begrenzt, wobei im Zylinderdeckel eine durchgängige Bohrung vorgesehen ist, welche in den Brennraum einmündet, und wobei in der Bohrung eine Vorrichtung zum Bestimmen des Drucks vorgesehen ist, welche erfindungsgemäss ausgestaltet ist.

Vorzugsweise ist die Bohrung derart ausgestaltet ist, dass das Fluid bei geöffnetem Ablassventil entlang der Aussenseite der Ventilhülse abströmen kann.

Vorzugsweise ist bei dem Grossmotor die Vorrichtung mit dem Ventilhalter ausgestaltet, wobei der Ventilhalter am Zylinderdeckel fixiert ist.

Ferner ist es für den Grossmotor bevorzugt, wenn die Vorrichtung den separaten Sitzkörper aufweist, wobei der separate Sitzkörper in der Bohrung gehalten und zwischen dem Brennraum und dem zweiten Ende der Ventilhülse angeordnet ist.

Der Grossmotor ist beispielsweise als längsgespülter Zweitakt-Grossdieselmotor ausgestaltet.

Auch ist es möglich, dass der Grossmotor als Dual-Fuel Grossdieselmotor ausgestaltet ist, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas als Brennstoff in den Brennraum eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine Schnittdarstellung eines ersten Ausführungsbeispiels einer erfindungsgemässen Vorrichtung, angeordnet in einem Zylinderdeckel eines Grossmotors,
- Fig. 2:: eine Schnittdarstellung des ersten Ausführungsbeispiels in einer Explosionsdarstellung,
- Fig. 3:: das erste Ende der Ventilhülse des ersten Ausführungsbeispiels und den Ventilhalter in einem Schnitt entlang der Schnittlinie III-III in Fig. 2,
- Fig. 4:: eine Schnittdarstellung eines zweiten Ausführungsbeispiels einer erfindungsgemässen Vorrichtung, angeordnet in einem Zylinderdeckel eines Grossmotors,
- Fig. 5:: eine Schnittdarstellung des zweiten Ausführungsbeispiels in einer Explosionsdarstellung, und
- Fig. 6:: das erste Endes der Ventilhülse des zweiten Ausführungsbeispiels und den Ventilhalter in einem Schnitt entlang der Schnittlinie VI-VI in Fig. 5.

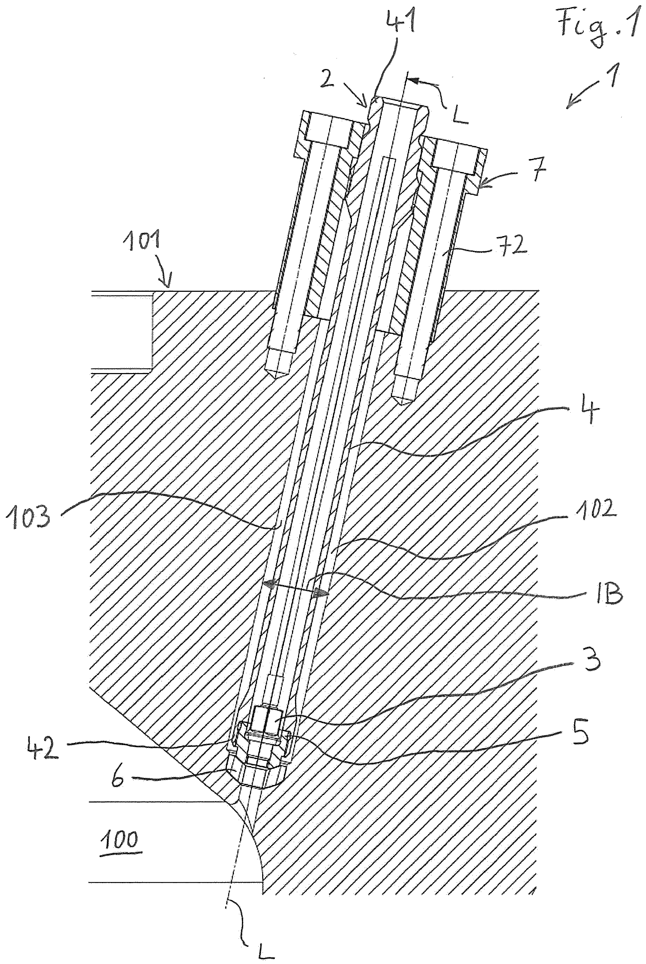

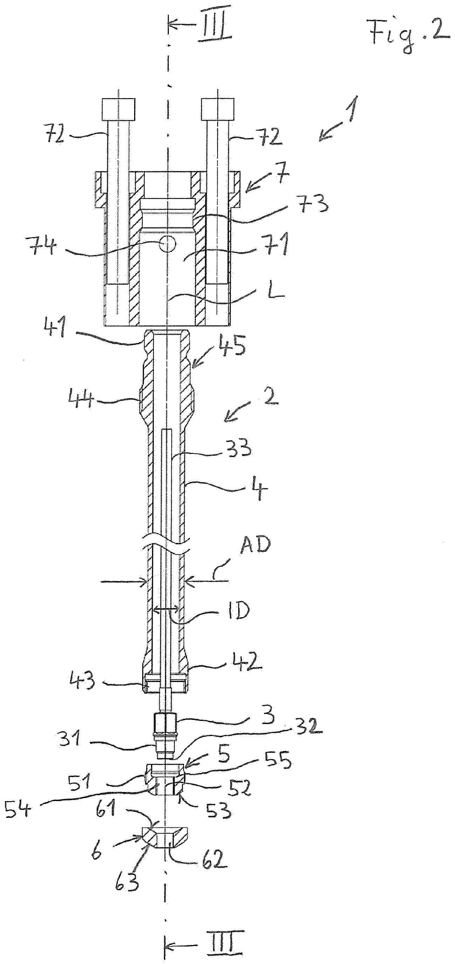

Fig. 1 zeigt in einer Längsschnittdarstellung ein erstes Ausführungsbeispiel einer erfindungsgemässen Vorrichtung zum Bestimmen des Drucks in einem Brennraum 100 eines Zylinders eines nicht näher dargestellten Grossmotors. Die Vorrichtung ist gesamthaft mit dem Bezugszeichen 1 bezeichnet. Fig. 1 zeigt die Vorrichtung 1 angeordnet in einem Zylinderdeckel 101, welcher den Brennraum 100 begrenzt. Zum besseren Verständnis zeigt Fig. 2 noch eine Schnittdarstellung der Vorrichtung 1 in einer Explosionsdarstellung.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossmotors jeweils einen Innendurchmesser (Bohrung), der mindestens etwa 200 mm beträgt.

Der Grossmotor kann als Viertakt- oder als Zweitakt-Motor ausgestaltet sein. Insbesondere kann der Grossmotor als Grossdieselmotor ausgestaltet sein, speziell als längsgespülter Zweitakt-Grossdieselmotor. Mit dem Begriff "Grossdieselmotor" sind dabei solche Grossmotoren gemeint, die in einem Dieselbetrieb betreibbar sind, bei welchem die Verbrennung des Brennstoffs üblicherweise nach dem Prinzip der Selbstzündung erfolgt. Im Rahmen dieser Anmeldung sind mit dem Begriff "Grossdieselmotor" auch solche Grossmotoren gemeint, die ausser im Dieselbetrieb, alternativ auch in einem Ottobetrieb betrieben werden können. Im Ottobetrieb erfolgt die Verbrennung typischerweise nach dem Prinzip der Fremdzündung des Brennstoffs. Auch ist es möglich, dass der Grossdieselmotor in Mischformen aus dem Dieselbetrieb und dem Ottobetrieb betrieben werden kann.

Als "flüssiger Brennstoff" wird ein Brennstoff bezeichnet, der im flüssigen Zustand in den Zylinder eingebracht wird. Als "gasförmiger Brennstoff' wird ein Brennstoff bezeichnet, der im gasförmigen Zustand in den Zylinder eingebracht wird.

Bei der folgenden Beschreibung der Erfindung wird mit beispielhaftem Charakter auf den für die Praxis wichtigen Fall eines Grossmotors Bezug genommen, der als längsgespülter Zweitakt-Grossdieselmotor ausgestaltet ist, und der als Hauptantriebsaggregat eines Schiffes verwendet wird. Dieser Grossdieselmotor ist vorzugsweise als Dual-Fuel Grossdieselmotor ausgestaltet, sodass er mit zwei unterschiedlichen Brennstoffen betreibbar ist, nämlich mit einem flüssigen Brennstoff wie Schweröl oder Marinediesel und mit einem gasförmigen Brennstoff, z. B. Erdgas. Der Dual-Fuel Grossdieselmotor kann während des Betriebs vom Verbrennen des ersten Brennstoffs auf das Verbrennen des zweiten Brennstoffs umgeschaltet werden und umgekehrt. Er ist also in einem Flüssigmodus betreibbar, in welchem ein flüssiger Brennstoff zur Verbrennung in den Brennraum eingebracht wird, und ferner in einem Gasmodus, in welchem ein Gas als Brennstoff in den Brennraum eingebracht wir. Im Gasmodus wird der Dual-Fuel-Motor vorzugsweise nach einem Niederdruckverfahren betrieben. Die Fremdzündung des Luft-Gas-Gemisches im Zylinder erfolgt im Gasmodus vorzugsweise durch die Einspritzung einer kleinen Menge selbstzündenden Brennstoffs, z. B. Schweröl oder Diesel, welche dann das Luft-Gas-Gemisch fremdzündet.

Es versteht sich, dass die Erfindung nicht auf diesen Typ von Grossmotor und auf diese Verwendung beschränkt ist, sondern Grossmotoren im Allgemeinen betrifft. Dabei ist es auch möglich, dass der Grossmotor nur für die Verbrennung eines einzigen Brennstoffs, beispielsweise Schweröl, Marinediesel oder Diesel, oder eines Gases wie Erdgas ausgestaltet ist. Der Grossmotor kann also auch als Gasmotor ausgestaltet sein. Auch ist es möglich, dass der Grossmotor als Multi-Fuel Grossmotor ausgestaltet ist, der mit einem ersten Brennstoff betrieben werden kann, und der mit mindestens einem zweiten Brennstoff betrieben werden kann, der von dem ersten Brennstoff verschieden ist. Natürlich kann der Grossmotor auch für die Verbrennung von mehr als zwei Brennstoffen ausgestaltet sein.

In jedem der üblicherweise mehreren Zylinder des Grossdieselmotors ist jeweils ein Kolben vorgesehen, der jeweils in Richtung der Zylinderachse zwischen einem oberen und einem unteren Umkehrpunkt hin- und her bewegbar angeordnet ist, und dessen Oberseite gemeinsam mit dem Zylinderdeckel 101 den Brennraum 100 begrenzt. Der Kolben ist in an sich bekannter Weise über eine Kolbenstange mit einem Kreuzkopf verbunden, welcher über eine Schubstange mit einer Kurbelwelle verbunden ist, sodass die Bewegung des Kolbens über die Kolbenstange, den Kreuzkopf und die Schubstange auf die Kurbelwelle übertragen wird, um diese zu drehen.

In den Brennraum 100 kann mittels mindestens einer nicht dargestellten Einspritzdüse der Brennstoff eingespritzt werden. Es können natürlich auch an jedem Zylinder mehrere Einspritzdüsen vorgesehen sein. Falls der Grossmotor mit unterschiedlichen Brennstoffen betreibbar ist, können für die unterschiedlichen Brennstoffe auch unterschiedliche Einspritzdüsen bzw. Einspritzvorrichtungen vorgesehen sein.

Im Zylinderdeckel 101 ist ein meistens zentral angeordnetes Auslassventil vorgesehen (nicht dargestellt), durch welches die Verbrennungsgase nach dem Verbrennungsprozess aus dem Zylinder in ein Abgassystem ausgetragen werden können.

Der weitere Aufbau und die einzelnen Komponenten des Grossdieselmotors wie beispielsweise Einzelheiten des Einspritzsystems, das Gaswechselsystem, das Abgassystem oder das Turboladersystem für die Bereitstellung der Spül- bzw. Ladeluft, sowie das Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Bei dem längsgespülten Zweitakt-Grossdieselmotor sind üblicherweise im unteren Bereich eines jeden Zylinders Spülluftöffnungen, beispielsweise ausgestaltet als Spülluftschlitze, zum Zuführen von Spülluft in den Zylinder vorgesehen, wobei die Spülluftöffnungen durch die Bewegung des Kolbens im Zylinder periodisch verschlossen und geöffnet werden, sodass die von dem Turbolader unter einem Ladedruck bereitgestellte Spülluft durch die Spülluftschlitze in den Zylinder einströmen kann, solange diese geöffnet sind.

Das Kontroll- und Steuerungssystem ist in modernen Grossmotoren ein elektronisches System, mit welchem sich üblicherweise alle Motor- oder Zylinderfunktionen, insbesondere die Einspritzung (Beginn und Ende der Einspritzung) und die Betätigung des Auslassventils, einstellen oder steuern bzw. regeln lassen.

Für einen effizienten, wirtschaftlichen und schadstoffarmen Betrieb des Grossmotors, ist es notwendig, dass der Druck im Brennraum 100 des Zylinders, beispielsweise der Kompressionsdruck oder der Zünddruck, während des Betriebs bekannt ist. Mit Hilfe des aktuellen Drucks im Brennraum 100 des Zylinders kann das Kontroll- und Steuerungssystem den Verbrennungsprozess kontrollieren und optimieren.

Zur Bestimmung des Drucks im Brennraum 100 des Zylinders ist die Vorrichtung 1 vorgesehen, welche in Fig. 1 im Zylinderdeckel 101 angeordnet dargestellt ist. Dazu ist im Zylinderdeckel 101 eine durchgängige Bohrung 102 vorgesehen, welche sich von der Aussenseite des Zylinderdeckels 101 (in Fig. 1 ist das die darstellungsgemässe Oberseite des Zylinderdeckels 101) durch den Zylinderdeckel 101 hindurch erstreckt und in den Brennraum 100 einmündet. Wie dies Fig. 1 zeigt, ist die Vorrichtung 1 in der Bohrung 102 angeordnet.

Im Folgenden wird nun die Vorrichtung 1 näher erläutert. Die Vorrichtung 1 zum Bestimmen des Drucks im Brennraum 100 umfasst ein Ablassventil 2 sowie einen Drucksensor 3 zum Bestimmen des Drucks. Erfindungsgemäss ist der Drucksensor 3 in das Ablassventil 2 integriert.

Das Ablassventil 2 dient zum Abführen von Fluiden aus dem Brennraum 100 durch den Zylinderdeckel 101. Das Ablassventil 2 ist beispielsweise ein solches, welches vor dem Starten des Grossmotors verwendet wird, um unerwünschte Inhaltsstoffe, wie beispielsweise Wasser, aus dem Zylinder bzw. dem Brennraum 100 zu entfernen. Dazu wird das Ablassventil 2 geöffnet, beispielsweise von Hand; und der Kolben wird durch Beaufschlagung mit Druckluft bewegt. Alternativ kann der Kolben natürlich auch durch eine elektrisch angetriebene Schaltmaschine bewegt werden. Durch die Kolbenbewegung wird dann die im Brennraum 100 befindliche Luft und/oder andere gasförmige oder flüssige Fluide, z. B. Wasser, durch das Ablassventil 2 ausgetragen. Dabei können insbesondere auch feststoffliche Ablagerungen durch den Fluidstrom mitgerissen und aus dem Brennraum 100 abgeführt werden. Nach diesem Vorgang, der auch als "Airrun" bezeichnet wird, werden die Ablassventile 2 an allen Zylindern geschlossen, beispielsweise manuell, und der Grossmotor kann gestartet werden.

Das Ablassventil 2 umfasst eine Ventilhülse 4, die als ein im Wesentlichen hohlzylindrisches Rohr ausgestaltet ist. Die Ventilhülse 4 erstreckt sich von einem ersten Ende 41 in einer Längsrichtung L, welche durch die Längsachse der Ventilhülse 4 festgelegt ist, bis zu einem zweiten Ende 42. Am zweiten Ende 42 der Ventilhülse 4 ist ein Schliesskörper 5 vorgesehen, welcher im Wesentlichen zylindrisch ausgestaltet ist, und welcher lösbar mit der Ventilhülse 4 verbunden ist. Dazu umfasst der Schliesskörper 5 ein Aussengewinde 51, und das zweite Ende 42 der Ventilhülse 4 ist mit einem Innengewinde 43 versehen, sodass der Schliesskörper 5 in die Ventilhülse 4 eingeschraubt werden kann und über diese Schraubverbindung mit der Ventilhülse 4 verbunden ist.

Der Schliesskörper 5 weist ferner eine zentrale durchgängige Bohrung 52 auf, welche sich im Zentrum des Schliesskörpers 5 in der Längsrichtung L durch den gesamten Schliesskörper 5 hindurch erstreckt. Diese durchgängige Bohrung 52 ist für die Aufnahme des Drucksensors 3 ausgestaltet.

Die der Ventilhülse 4 abgewandte äussere Stirnfläche des Schliesskörpers 5 ist als eine konische Dichtfläche 53 ausgebildet, welche zum dichtenden Zusammenwirken mit einem Ventilsitz 61 eines separaten Sitzkörpers 6 ausgestaltet ist. Die konische Dichtfläche 53 ist konzentrisch mit der zentralen durchgängigen Bohrung 52 angeordnet, sodass diese von der Dichtfläche 53 umgeben wird.

Der separate Sitzkörper 6 ist im zusammengebauten Zustand darstellungsgemäss (Fig. 2) unterhalb des Schliesskörpers 5 angeordnet, sodass die konische Dichtfläche 53 dichtend mit dem ebenfalls konisch ausgestalteten Ventilsitz 61 des Sitzkörpers 6 zusammenwirken kann.

Der Sitzkörper 6 weist eine zentrale durchgängige Öffnung 62 auf, welche mit der Bohrung 52 im Schliesskörper 5 fluchtet, und welche sich im Zentrum des Sitzkörpers 6 in der Längsrichtung L durch den gesamten Sitzkörper 6 hindurch erstreckt. Die dem Schliesskörper 5 abgewandte Stirnfläche 63 des Sitzkörpers 6 ist vorzugsweise konisch ausgestaltet.

Wenn der Sitzkörper 6 in die Bohrung 102 im Zylinderdeckel 101 eingesetzt ist (Fig. 1), liegt seine Stirnfläche 63 an einer entsprechend ausgestalteten Auflagefläche in der Bohrung 102 an. Der Sitzkörper 6 ist in der Bohrung 102 des Zylinderdeckels 101 beispielsweise über einen Presssitz gehalten. Dazu kann der Sitzkörper 6 in Bezug auf die Bohrung 102 mit einem geringen Übermass ausgestaltet sein, sodass der Sitzkörper 6 in die Bohrung 102 eingepresst ist. Im montierten und geschlossenen Zustand des Ablassventils 2 ist der Sitzkörper 6 zudem durch die Ventilhülse 4 und den Schliesskörper 5 verspannt.

Der in das Ablassventil 2 integrierte Drucksensor 3 ist in der Ventilhülse 4 im Bereich ihres zweiten Endes 42 angeordnet, sodass sich der Drucksensor 3 in unmittelbarer Nähe des Brennraums 100 befindet, wenn die Vorrichtung 1 in die Bohrung 102 im Zylinderdeckel 101 eingeführt ist. Der Drucksensor 3 ist lösbar bezüglich des Ablassventils 2 fixiert. Vorzugsweise ist der Drucksensor 3 im Schliesskörper 5 fixiert, wobei die Fixierung mittels einer Gewindeverbindung erfolgt. Dazu weist der im Wesentlichen zylindrische Drucksensor 3 an seiner Aussenfläche ein Sensorgewinde 31 auf, welches als Aussengewinde ausgestaltet ist. Zudem ist die zentrale durchgehende Bohrung 52 im Schliesskörper 5 mit einem Innengewinde 54 versehen, welches zum Zusammenwirken mit dem Sensorgewinde 31 des Drucksensors 3 ausgestaltet ist, sodass der Drucksensor 3 in die zentrale durchgängige Bohrung 52 eingeschraubt werden kann und dann in dieser fixiert ist. In der Bohrung 52 ist eine Schulter 55 vorgesehen, welche als Anschlag für den Drucksensor 3 dient. Zudem dient die Schulter 55 auch als Dichtfläche, welche bei eingeschraubtem Drucksensor 3 dichtend mit dem Drucksensor 3 zusammenwirkt. Somit dient der Schliesskörper 5 des Ablassventils 2 gleichzeitig als Halterung für den Drucksensor 3.

Der Drucksensor 3 weist an seiner darstellungsgemäss (Fig. 2) unteren Stirnfläche eine Sensorfläche 32 auf, mittels welcher der Druck in an sich bekannter Weise messbar ist. Im zusammengebauten Zustand (Fig. 1) ist der Drucksensor in der zentralen durchgängigen Bohrung 52 des Schliesskörpers 5 derart fixiert, dass sich die Sensorfläche 32 bezüglich der Längsrichtung L zumindest ungefähr an der als Dichtfläche 53 ausgestalteten Stirnfläche des Schliesskörpers 5 befindet, aber nicht über diese hinausragt. Wenn die Vorrichtung 1 in der Bohrung 102 im Zylinderdeckel 101 angeordnet ist, befindet sich der Drucksensor 3 bzw. die Sensorfläche 32 in unmittelbarer Nähe des Brennraums 100 und wird durch die Öffnung 62 im Sitzkörper 6 und die zentrale durchgängige Bohrung 52 im Schliesskörper 5 mit dem im Brennraum herrschenden Druck beaufschlagt.

Als Drucksensor 3 sind alle an sich bekannten Drucksensoren geeignet, insbesondere solche, die üblicherweise für die Druckmessung im Brennraum eines Grossmotors verwendet werden. Der Drucksensor 3 kann insbesondere ein resistiver Drucksensor oder ein piezoelektrischer Drucksensor sein.

Der Drucksensor 3 ist über eine Leitung 33, welche sich durch das Innere der Ventilhülse 4 hindurch erstreckt, mit einer nicht dargestellten Kontrolleinheit signalverbunden, welche die Messsignale des Drucksensors 3 empfängt.

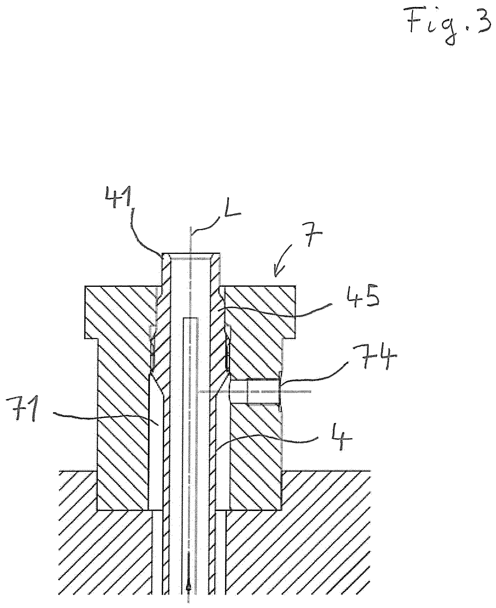

Das Ablassventil 2 weist ferner einen Ventilhalter 7 auf, mit welchem das Ablassventil 2 an dem Zylinderdeckel 101 befestigt werden kann. Zum besseren Verständnis zeigt Fig. 3 nochmals das erste Ende 41 der Ventilhülse 4 und den Ventilhalter 7 in einem Schnitt entlang der Schnittlinie III-III in Fig. 2 und in der in Fig. 2 durch die Pfeile angedeuteten Blickrichtung.

Der Ventilhalter 7 ist als ein im Wesentlichen hohlzylindrischer Körper bzw. als Flansch ausgestaltet, der mit einer durchgängigen zentralen Ausnehmung 71 versehen ist, welche die Ventilhülse 4 aufnimmt. Der Ventilhalter 7 ist im Bereich des ersten Endes 41 der Ventilhülse 4 und konzentrisch mit der Ventilhülse 4 angeordnet, derart dass der Ventilhalter 7 die Ventilhülse 4 vollständig umgibt. Der Ventilhalter 7 kann mittels zweier Schrauben 72 auf dem Zylinderdeckel 101 oder in einer Ausnehmung im Zylinderdeckel 101 befestigt werden, wie dies insbesondere Fig. 1 zeigt. Die zentrale Ausnehmung 71 weist ein Innengewinde 73 auf, welches mit einem Aussengewinde 44 zusammenwirkt, das im Bereich des ersten Endes 41 an der Ventilhülse 4 vorgesehen ist. Das Aussengewinde 44 ist an der Ventilhülse 4 an einem Endbereich 45 vorgesehen, der einen grösseren Aussendurchmesser aufweist als der übrige Teil der Ventilhülse 4. Die Ventilhülse 4 ist durch das Zusammenwirken des Innengewindes 73 mit dem Aussengewinde 44 gehalten. Durch Drehen der Ventilhülse 4 um die Längsrichtung L kann die Ventilhülse 4 relativ zum Ventilhalter 7 in Längsrichtung L auf- bzw. abwärts bewegt werden. Durch ein Drehen der Ventilhülse 4 in dem Innengewinde 73 wird der Schliesskörper 5 aus einer Schliessstellung, in welcher die Dichtfläche 53 des Schliesskörpers 5 dichtend mit dem Ventilsitz 61 des Sitzkörpers 6 zusammenwirkt, sodass das Ablassventil 2 geschlossen ist, in eine Offenstellung bewegt, in welcher die Dichtfläche 53 von dem Ventilsitz 61 abgehoben ist, sodass das Ablassventil 2 geöffnet ist und das Fluid zwischen der Dichtfläche 53 und dem Ventilsitz 61 hindurchströmen kann. Die Ventilhülse 4 mit dem daran befestigten Schliesskörper 5 fungiert als Spindel des Ablassventils 2.

Darstellungsgemäss (Fig. 3) unterhalb des Endbereichs 45 der Ventilhülse 4 weist der Ventilhalter 7 einen Auslass 74 auf, durch welchen das Fluid aus dem Brennraum 100 abführbar ist, wenn das Ablassventil 2 geöffnet ist. Der Auslass 74 ist seitlich - also in der Mantelfläche des Ventilhalters 7 angeordnet.

Die Ventilhülse 4 weist darstellungsgemäss (Fig. 2) unterhalb des Endbereichs 45 einen kleineren Aussendurchmesser AD auf als im Endbereich 45. Der Aussendurchmesser AD ist dabei kleiner als der Innendurchmesser IB (Fig. 1) der Bohrung 102 im Zylinderdeckel 101 und so bemessen, dass zwischen der Aussenseite der Ventilhülse 4 und der die Bohrung 102 begrenzenden Wandung im Zylinderdeckel 101 ein Ringraum 103 ausgebildet ist. Dadurch kann bei geöffnetem Ablassventil 2 das Fluid aus dem Brennraum 100 zwischen dem Ventilsitz 61 und der Dichtfläche 53 hindurch und durch den Ringraum 103 entlang der Aussenseite der Ventilhülse 4 zum Auslass 74 strömen und durch diesen austreten. Dabei ist es ein besonderer Vorteil, dass das zwischen dem Ventilsitz 61 und der Dichtfläche 53 hindurchströmende Fluid einen reinigenden Effekt auf den Drucksensor 3 und insbesondere dessen Sensorfläche 32 hat. Da der Drucksensor 3 bzw. die Sensorfläche 32 unmittelbar an der Dichtfläche 53 angeordnet ist, werden Ablagerungen auf der Sensorfläche 32 und um die Sensorfläche 32 herum durch den Fluidstrom abgelöst und von diesem mitgerissen zum Auslass 74.

Bei der hier beschriebenen Ausführungsform wird das Ablassventil 2 manuell betätigt. Durch händisches Drehen der Ventilhülse 4 um die Längsrichtung L wird das Ablassventil durch das Zusammenwirken des Innengewindes 73 und des Aussengewindes 44 geöffnet bzw. geschlossen.

Es sind natürlich auch solche Ausführungsformen des Ablassventils 2 möglich, bei welchen das Öffnen und Schliessen des Ablassventils mittels eines Ventilantriebs erfolgt, der das Ablassventil 2 beispielsweise hydraulisch oder elektrisch öffnet bzw. schliesst. Ferner ist es möglich, dass das Ablassventil 2 als ein selbsttätiges Ventil ausgestaltet ist, beispielsweise als ein Sicherheitsventil, welches automatisch beim Überschreiten eines Grenzdrucks im Brennraum 100 öffnet.

Der Innendurchmesser ID der Ventilhülse 4 ist so bemessen, dass er grösser ist als der (maximale) Aussendurchmesser des Drucksensors 3, sodass der Drucksensor 3 in die Ventilhülse 4 einführbar ist. Dabei kann der Drucksensor 3 in dem hier erläuterten Ausführungsbeispiel sowohl vom ersten Ende 41 der Ventilhülse 4 als auch vom zweiten Ende 42 der Ventilhülse 4 in die Ventilhülse 4 eingeführt werden. Insbesondere kann der Drucksensor 3 zur Montage bzw. zur Demontage durch die gesamte Ventilhülse 4 hindurch bewegt werden.

Ein besonderer Vorteil der Vorrichtung 1 ist es, dass die Montage bzw. die Demontage des Drucksensors 3 ausserhalb der Bohrung 102 erfolgen kann. Insbesondere bedarf es in der Bohrung 102 des Zylinderdeckels 101 keiner Gewinde, um den Drucksensor 3 zu montieren bzw. zu fixieren.

Für den Zusammenbau der Vorrichtung 1 kann beispielsweise wie folgt vorgegangen werden. Zunächst wird der Drucksensor 3 mitsamt der Leitung 33 darstellungsgemäss (Fig. 2) unterhalb des zweiten Endes 42 der Ventilhülse 4 platziert, also beispielsweise so, wie es die Explosionsdarstellung der Fig. 2 zeigt. Dazu kann der Drucksensor 3 zusammen mit der Leitung 33 von dem ersten Ende 41 der Ventilhülse 4 durch die gesamte Ventilhülse 4 hindurch geschoben werden, bis er über das zweite Ende 42 der Ventilhülse 4 hinausragt. Alternativ kann natürlich auch die Leitung 33 mit dem daran befindlichen Drucksensor 3 darstellungsgemäss von unten, also von dem zweiten Ende 42 der Ventilhülse 4 in die Ventilhülse 4 eingeführt werden, bis sich der Drucksensor 3 unterhalb des zweiten Endes 42 der Ventilhülse 4 befindet.

Anschliessend wird der Drucksensor 3 mit seinem Sensorgewinde 31 in das Innengewinde 54 in der zentralen durchgängigen Bohrung 52 des Schliesskörpers 5 eingeschraubt, bis der Drucksensor 3 an der Schulter 55 anliegt. Somit ist der Drucksensor 3 im Schliesskörper 5 über die Gewindeverbindung des Sensorgewindes 31 mit dem Innengewinde 54 sicher fixiert. Anschliessend wird der Schliesskörper 5 mit dem darin fixierten Drucksensor 3 in das Innengewinde 43 am zweiten Ende 42 der Ventilhülse 4 eingeschraubt. Durch das Zusammenwirken des Innengewindes 43 mit dem Aussengewinde 51 des Schliesskörpers 5 ist der Schliesskörper 5 mit der Ventilhülse 4 verbunden und bezüglich dieser fixiert. Vorzugsweise ist in der Ventilhülse 4 ein Anschlag vorgesehen, an welchem der Schliesskörper 5 anliegt, wenn der Schliesskörper 5 in das zweite Ende 42 der Ventilhülse 4 eingeschraubt ist.

Die Demontage des Drucksensors 3 erfolgt beispielsweise in sinngemäss umgekehrter Reihenfolge.

Nachdem der Drucksensor 3 im Ablassventil 2 montiert ist, wird das Ablassventil 2 am Zylinderdeckel 101 befestigt. Dabei wird zunächst der Sitzkörper 6 in die Bohrung 102 im Zylinderdeckel 100 eingebracht, sodass seine Stirnfläche 63 an einer entsprechend ausgestalteten Auflagefläche in der Bohrung 102 anliegt. Dabei sind die Stirnfläche 63 des Sitzkörpers 6 und die Auflagefläche in der Bohrung 102 derart ausgestaltet, dass diese beiden Flächen dichtend zusammenwirken. Der Sitzkörper 6 ist in der Bohrung 102 beispielsweise über einen Presssitz gehalten.

Anschliessend wird das Ablassventil 2 mit dem Schliesskörper 5 voran in die Bohrung 102 im Zylinderdeckel 101 eingeführt und mit den beiden Schrauben 72 des Ventilhalters 7 am Zylinderdeckel 101 fixiert.

Zur Demontage des Ablassventils 2, beispielsweise um den Drucksensor 3 zu reinigen, werden die beiden Schrauben 72 gelöst und das Ablassventil 2 wird aus der Bohrung 102 herausgezogen. Dabei ist es nicht notwendig, auch den Sitzkörper 6 zu entfernen. Dieser kann in der Bohrung 102 verbleiben.

Die erfindungsgemässe Integration des Drucksensors 3 in das Ablassventil 2 hat ferner den erheblichen Vorteil, dass hierdurch eine Bohrung im Zylinderdeckel 101 gespart werden kann, weil es nicht mehr notwendig ist, für den Drucksensor 3 eine separate Bohrung vorzusehen. Dies ist insbesondere aus fertigungstechnischen Gründen vorteilhaft.

Auch ist es ein Vorteil, dass die Montage bzw. die Demontage des Drucksensors 3 ausserhalb des Zylinderdeckels 101 erfolgt, also wenn das Ablassventil 2 aus der Bohrung 102 herausgenommen ist. Hierdurch bedarf es keiner langen und spezialisierten Werkzeuge mehr, mit welchen in die Bohrung 102 eingegriffen werden muss. Dies schont auch das in der Regel recht feine Sensorgewinde 31.

Ein weiterer Vorteil ist es, dass die Funktion des Drucksensors 3 in einfacher Weise geprüft werden kann, ohne dass dafür der Drucksensor 3 demontiert werden muss. Dazu wird an den Auslass 74 vorübergehend ein externer Drucksensor angeschlossen. Wenn nun das Ablassventil 2 geöffnet wird, so wird der am Auslass 74 angeordnete externe Drucksensor ebenfalls mit dem Druck im Brennraum 100 beaufschlagt. Durch einen Vergleich der Messwerte des Drucksensors 3 mit den Messwerten des externen Drucksensors am Auslass 74 kann dann der Drucksensor 3 geprüft oder auch kalibriert werden. Durch eine solche Prüfung kann beispielsweise ermittelt werden, ob der Drucksensor 3 bereits so stark verschmutzt ist, beispielsweise durch Ablagerungen auf der Sensorfläche 32, dass ein Reinigen des Drucksensors 3 notwendig ist.

Zum Reinigen des Drucksensors 3 ist es natürlich möglich, das Ablassventil 2 aus der Bohrung 102 herauszuziehen, den Drucksensor 3 zu demontieren, zu reinigen und ihn anschliessend wieder zu montieren.

Es ist aber auch möglich, wie vorangehend beschrieben, den Drucksensor 3 durch den Fluidstrom zu reinigen, welcher bei geöffnetem Ablassventil 2 durch das Ablassventil 2 strömt. Dies kann beispielsweise vor dem Start des Grossmotors erfolgen. Es ist aber auch möglich, während des Betriebs des Grossmotors kurzfristig das Ablassventil 2 zu öffnen, um so eine reinigende Wirkung auf den Drucksensor 3 zu erzielen.

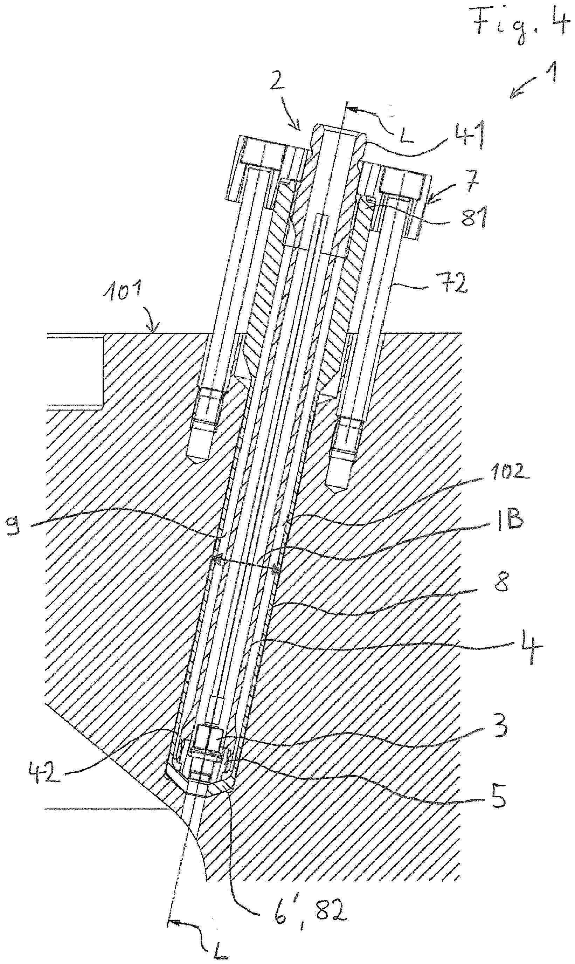

Fig. 4 zeigt eine Schnittdarstellung eines zweiten Ausführungsbeispiels einer erfindungsgemässen Vorrichtung 1, angeordnet in einem Zylinderdeckel 101 eines Grossmotors. Bei der folgenden Beschreibung des zweiten Ausführungsbeispiels wird nur auf die Unterschiede zu dem ersten Ausführungsbeispiel näher eingegangen. Ansonsten gelten die Erläuterungen des ersten Ausführungsbeispiels in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

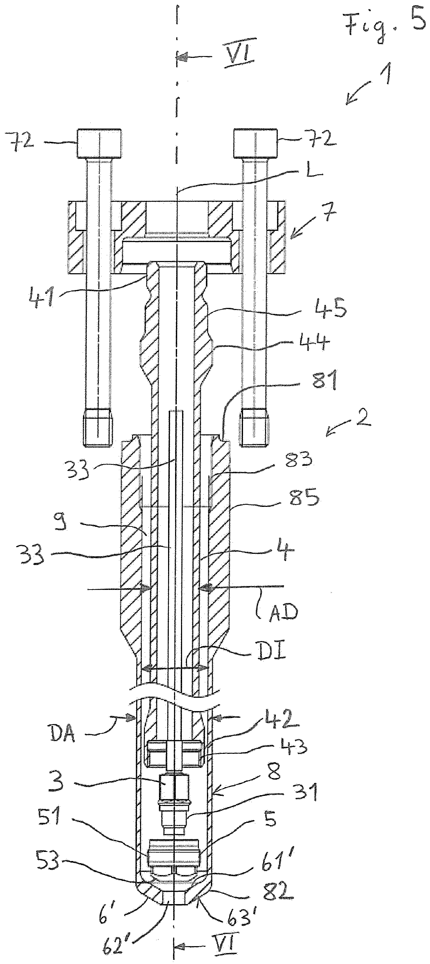

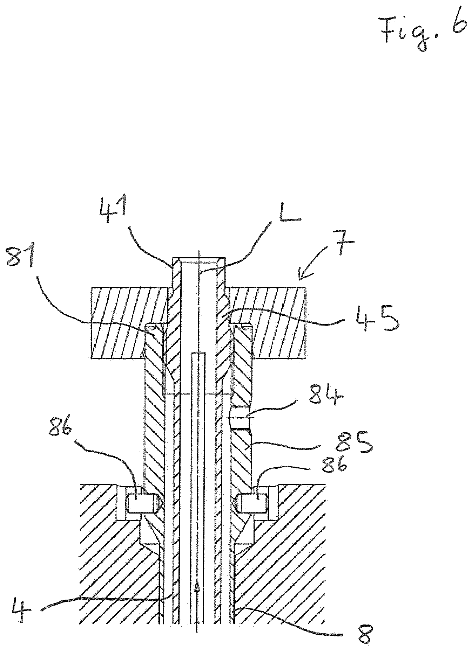

Zum besseren Verständnis zeigt Fig. 5 noch eine Schnittdarstellung des zweiten Ausführungsbeispiels in einer Explosionsdarstellung, und Fig. 6 zeigt das erste Ende 42 der Ventilhülse 4 des zweiten Ausführungsbeispiels sowie den Ventilhalter 7 in einem Schnitt entlang der Schnittlinie VI-VI in Fig. 5 und in der in Fig. 5 durch die Pfeile angedeuteten Blickrichtung.

Bei dem zweiten Ausführungsbeispiel umfasst das Ablassventil 2 zusätzlich eine im Wesentlichen hohlzylindrische Aussenhülse 8, welche konzentrisch mit der Ventilhülse 4 angeordnet ist, und welche sich von einem oberen Ende 81 in Längsrichtung L bis zu einem unteren Ende 82 erstreckt. Dabei ist das obere Ende 81 im zusammengesetzten Zustand benachbart zum ersten Ende 41 der Ventilhülse 4 angeordnet, und das untere Ende 82 ist benachbart zum zweiten Ende 42 der Ventilhülse 4 angeordnet. Die Ventilhülse 4 ist in der Aussenhülse 8 angeordnet. An ihrem oberen Ende 81 weist die Aussenhülse 8 einen ersten Endbereich 85 auf, der einen grösseren Aussendurchmesser aufweist als der übrige Teil der Aussenhülse 8. In diesem ersten Endbereich 85 der Hülse 8 ist seitlich ein Auslass 84 (Fig. 6) vorgesehen, welcher sich durch die zylindrische Wandung der Aussenhülse 8 erstreckt. Der Auslass 84 hat eine analoge Funktion wie der Auslass 74 des ersten Ausführungsbeispiels.

Der Aussendurchmesser DA der Aussenhülse 8 ist darstellungsgemäss (Fig. 4, Fig. 5) unterhalb des ersten Endbereichs 85 derart bemessen, dass er im Wesentlichen dem Innendurchmesser IB der Bohrung 102 im Zylinderdeckel 101 entspricht, sodass die Aussenhülse 8 mit ihrer äusseren Wandung an der die Bohrung 102 begrenzenden Wandung anliegt, wenn das Ablassventil 2 in die Bohrung 102 im Zylinderdeckel 101 eingeführt ist.

Die Ventilhülse 4 ist darstellungsgemäss (Fig. 5) unterhalb des Endbereichs 45 der Ventilhülse 4 mit einem Aussendurchmesser AD ausgestaltet, der kleiner ist als der Aussendurchmesser des Endbereichs 45. Der Aussendurchmesser AD ist dabei kleiner als der Innendurchmesser DI (Fig. 5) der Aussenhülse 8 unterhalb des ersten Endbereichs 85 und ist so bemessen, dass zwischen der Aussenseite der Ventilhülse 4 und der Innenwand der Aussenhülse ein Ringraum 9 ausgebildet ist. Dadurch kann bei geöffnetem Ablassventil 2 das Fluid aus dem Brennraum 100 durch diesen Ringraum 9 zwischen der Ventilhülse 4 und der Aussenhülse 8 hindurch zum Auslass 84 strömen und durch diesen austreten.

Das untere Ende 82 der Aussenhülse 8 ist als Sitzkörper 6' ausgestaltet, d.h. das untere Ende 82 der Aussenhülse 8 entspricht in seiner Funktion und Ausgestaltung im Wesentlichen dem Sitzkörper 6 des ersten Ausführungsbeispiels. Allerdings ist bei dem zweiten Ausführungsbeispiel der Sitzkörper 6' am unteren Ende 82 integraler Bestandteil der Aussenhülse 8. Dieser Sitzkörper 6' ist in sinngemäss gleicher Weise wie der Sitzkörper 6 des ersten Ausführungsbeispiels mit einem Ventilsitz 61', einer zentralen durchgängigen Öffnung 62 und mit einer Stirnfläche 63' ausgestaltet, mit welcher das Ablassventil 2 im montierten Zustand an einer entsprechend ausgestalteten Auflagefläche in der Bohrung 102 im Zylinderdeckel 101 anliegt. Die Stirnfläche 63' des Sitzkörpers 6' und die Auflagefläche in der Bohrung 102 sind derart ausgestaltet, dass diese beiden Flächen dichtend zusammenwirken.

Der Ventilsitz 61' wirkt in sinngemäss gleicher Weise wie bei dem ersten Ausführungsbeispiel mit der Dichtfläche 53 des Schliesskörpers zusammen. Wenn das Ablassventil 2 geschlossen ist, befindet sich der Schliesskörper 5 in seiner Schliessstellung, in welcher die Dichtfläche 53 dichtend mit dem Ventilsitz 61' zusammenwirkt. Wenn das Ablassventil 2 geöffnet ist, befindet sich der Schliesskörper 5 in seiner Offenstellung, in welcher die Dichtfläche 53 von dem Ventilsitz 61' abgehoben ist, sodass das Fluid aus dem Brennraum 100 zwischen dem Ventilsitz 61' und der Dichtfläche 53 hindurch zum Auslass 84 strömen kann.

Die Ventilhülse 4 ist mit ihrem Endbereich 45 über eine Gewindeverbindung in dem ersten Endbereich 85 der Aussenhülse 8 gehalten. Dazu weist der erste Endbereich 85 der Aussenhülse 8 ein Innengewinde 83 auf, welches mit dem Aussengewinde 44 am Endbereich 45 der Ventilhülse 4 zusammenwirkt. Somit kann die Ventilhülse 4 mit ihrem Endbereich 45 in den ersten Endbereich 85 der Aussenhülse 8 eingeschraubt werden.

Durch ein Drehen der Ventilhülse 4 um die Längsrichtung L kann die Ventilhülse 4 relativ zur Aussenhülse 8 in Längsrichtung L auf und ab bewegt werden, sodass das Ablassventil 2 durch dieses Drehen geöffnet bzw. geschlossen werden kann.

Der als Flansch ausgestaltete Ventilhalter 7 umfasst den ersten Endbereich 85 der Aussenhülse 8, wobei sich das obere Ende 81 der Aussenhülse 8 in dem Ventilhalter 7 abstützt. Der Ventilhalter 7 wird mittels der Schrauben 72 am Zylinderdeckel 101 befestigt. Bei dem zweiten Ausführungsbeispiel sind die Schrauben 72 vorzugsweise als Dehnschrauben ausgestaltet. Zusätzlich sind an der Aussenhülse 8 Drehsicherungen 86 (Fig. 6) vorgesehen, um ein Drehen der Aussenhülse 8 relativ zu der Bohrung 102 im Zylinderdeckel 101 zu verhindern.

Die Montage des Drucksensors 3 erfolgt in sinngemäss gleicher Weise wie bei dem ersten Ausführungsbeispiel. Zunächst wird der Drucksensor 3 darstellungsgemäss (Fig. 5) unterhalb des zweiten Endes 42 der Ventilhülse 4 platziert. Dann wird der Drucksensor 3 in die zentrale durchgängige Bohrung 52 im Schliesskörper 5 eingeschraubt, bis er an dem Anschlag in dieser Bohrung 52 anliegt. Anschliessend wird der Schliesskörper 5 in das zweite Ende 42 der Ventilhülse 4 eingeschraubt. Dann wird die Ventilhülse 4 in die Aussenhülse 8 eingeführt, bis das Aussengewinde 44 der Ventilhülse 4 in das Innengewinde 83 der Ventilhülse 8 eingreift. Nun kann durch Drehen der Ventilhülse 4 in dem Innengewinde 83 das Ablassventil 2 geschlossen werden. Schliesslich wird die Aussenhülse 8 mit der darin angeordneten Ventilhülse 4 in die Bohrung 102 eingeführt und mittels des Ventilhalters 7 am Zylinderdeckel 101 befestigt.

Die erfindungsgemässe Anordnung zum Bestimmen des Drucks im Brennraum 100 eines Zylinders eignet sich grundsätzlich für alle Grossmotoren und insbesondere für die vorangehend genannten Grossmotoren.

## Patentansprüche

1. Vorrichtung zum Bestimmen des Drucks in einem Brennraum (100) eines Grossmotors, umfassend ein Ablassventil (2) zum Abführen eines Fluids aus dem Brennraum (100) durch einen den Brennraum (100) begrenzenden Zylinderdeckel (101), sowie einen Drucksensor(3) zum Bestimmen des Drucks in dem Brennraum (100), wobei das Ablassventil (2) eine Ventilhülse (4) umfasst, welche sich von einem ersten Ende(41) in einer Längsrichtung (L) bis zu einem zweiten Ende (42) erstreckt, wobei am zweiten Ende (42) der Ventilhülse (4) ein Schliesskörper (5) zum dichtenden Zusammenwirken mit einem Ventilsitz (61, 61') vorgesehen ist, und wobei der Schliesskörper (5) lösbar mit der Ventilhülse (4) verbunden ist, **dadurch gekennzeichnet, dass** der Drucksensor (3) in das Ablassventil (2) integriert ist, wobei der Drucksensor (3) in der Ventilhülse (4) im Bereich des zweiten Endes (42) angeordnet ist, wobei der Drucksensor (3) lösbar bezüglich des Ablassventils (2) fixiert ist, und wobei der Aussendurchmesser des Drucksensors (3) kleiner ist als der Innendurchmesser (ID) der Ventilhülse (4), derart dass der Drucksensor (3) in die Ventilhülse einführbar ist.

2. Vorrichtung nach Anspruch 1, wobei der Drucksensor (3) im Schliesskörper (5) fixiert ist, vorzugsweise mittels einer Gewindeverbindung.

3. Vorrichtung nach einem der vorangehenden Ansprüche, wobei der Drucksensor (3) in einer zentralen durchgängigen Bohrung (52) im Schliesskörper (5) angeordnet ist, sodass der Drucksensor (3) mit dem im Brennraum (100) herrschenden Druck beaufschlagbar ist.

4. Vorrichtung nach einem der vorangehenden Ansprüche, wobei der Schliesskörper (5) mittels einer Schraubverbindung mit der Ventilhülse (4) verbunden ist.

5. Vorrichtung nach einem der vorangehenden Ansprüche, mit einem Ventilhalter (7) zum Befestigen des Ablassventils (2) an dem Zylinderdeckel (101), wobei der Ventilhalter (7) konzentrisch mit der Ventilhülse (4) angeordnet ist.

6. Vorrichtung nach Anspruch 5, wobei der Ventilhalter (7) einen seitlich angeordneten Auslass (74) aufweist, durch welchen das Fluid abführbar ist.

7. Vorrichtung nach einem der vorangehenden Ansprüche, wobei die Ventilhülse (4) im Bereich ihres ersten Endes (41) ein Aussengewinde (44) aufweist, mittels welchem der Schliesskörper (5) durch ein Drehen der Ventilhülse (4) aus einer Schliessstellung in eine Offenstellung bewegbar ist.

8. Vorrichtung nach einem der vorangehenden Ansprüche, mit einer Aussenhülse (8), welche die Ventilhülse (4) aufnimmt und konzentrisch umgibt, wobei ein Ende (82) der Aussenhülse als ein Ventilsitz (61') ausgestaltet ist, welcher zum dichtenden Zusammenwirken mit dem Schliesskörper (5) ausgestaltet und angeordnet ist.

9. Vorrichtung nach einem der Ansprüche 1-7, wobei ein separater Sitzkörper (6) mit einem Ventilsitz (61) vorgesehen ist, welcher zum dichtenden Zusammenwirken mit dem Schliesskörper (5) ausgestaltet und angeordnet ist, und wobei der Sitzkörper (6) eine zentrale durchgängige Öffnung (62) aufweist, sodass der Drucksensor (3) mit dem im Brennraum herrschenden Druck beaufschlagbar ist.

10. Grossmotor mit mindestens einem Zylinder, in welchem ein Kolben zwischen einem unteren und einem oberen Umkehrpunkt hin- und her bewegbar angeordnet ist, und mit einem Zylinderdeckel (101), welcher gemeinsam mit dem Kolben einen Brennraum (100) im Zylinder begrenzt, wobei im Zylinderdeckel (101) eine durchgängige Bohrung (102) vorgesehen ist, welche in den Brennraum (100) einmündet, **dadurch gekennzeichnet, dass** in der Bohrung (102) eine Vorrichtung (1) zum Bestimmen des Drucks vorgesehen ist, welche gemäss einem der vorangehenden Ansprüche ausgestaltet ist.

11. Grossmotor nach Anspruch 10, wobei die Bohrung (102) derart ausgestaltet ist, dass das Fluid bei geöffnetem Ablassventil (2) entlang der Aussenseite der Ventilhülse (4) abströmen kann.

12. Grossmotor nach einem der Ansprüche 10-11, wobei die Vorrichtung (1) gemäss Anspruch 5 ausgestaltet ist, und wobei der Ventilhalter (7) am Zylinderdeckel (101) fixiert ist.

13. Grossmotor nach einem der Ansprüche 10-12, wobei die Vorrichtung (1) gemäss Anspruch 9 ausgestaltet ist, und wobei der separate Sitzkörper (6) in der Bohrung (102) gehalten und zwischen dem Brennraum (100) und dem zweiten Ende (42) der Ventilhülse (4) angeordnet ist.

14. Grossmotor nach einem der Ansprüche 10-13, ausgestaltet als längsgespülter Zweitakt-Grossdieselmotor.

15. Grossmotor nach einem der Ansprüche 10-14, ausgestaltet als Dual-Fuel Grossdieselmotor, der in einem Flüssigmodus betreibbar ist, in welchem ein flüssiger Brennstoff zur Verbrennung in den Brennraum (100) eingebracht wird, und der ferner in einem Gasmodus betreibbar ist, in welchem ein Gas als Brennstoff in den Brennraum (100) eingebracht wird.
